**Europäisches Patentamt**

**European Patent Office**

**Office européen des brevets**

(19)

(11) Veröffentlichungsnummer: **0 051 714 B1**

(12) ## EUROPÄISCHE PATENTSCHRIFT

(45) Veröffentlichungstag der Patentschrift:
**22.08.84**

(51) Int. Cl.³: **A 41 D 13/00, B 62 J 33/00**

(21) Anmeldenummer: **81103486.7**

(22) Anmeldetag: **07.05.81**

(54) **Bekleidungsstück, wie Jacke, Parka, Overall, Mantel, Blouson od. dgl., zum Erwärmen von Personen, die Kraftfahrzeuge fahren.**

(30) Priorität: **11.10.80 DE 8027178 U**
**15.10.80 DE 8027524 U**
**07.11.80 DE 8029729 U**
**25.11.80 DE 8031329 U**

(43) Veröffentlichungstag der Anmeldung:
**19.05.82 Patentblatt 82/20**

(45) Bekanntmachung des Hinweises auf die Patenterteilung:
**22.08.84 Patentblatt 84/34**

(84) Benannte Vertragsstaaten:
**BE CH FR GB IT LI LU NL SE**

(56) Entgegenhaltungen:
**BE - A - 881 337**
**FR - A - 1 155 985**
**FR - A - 1 163 641**
**FR - A - 1 503 619**
**FR - A - 2 079 350**
**FR - A - 2 436 063**
**FR - A - 2 437 973**
**US - A - 2 413 386**
**US - A - 2 460 269**
**US - A - 2 966 684**
**US - A - 3 211 216**
**US - A - 3 452 812**
**US - A - 4 146 933**

(73) Patentinhaber: **Roehr, Oskar W.K., Windmühlenstieg 15, D-2000 Hamburg 52 (DE)**

(72) Erfinder: **Roehr, Oskar W.K., Windmühlenstieg 15, D-2000 Hamburg 52 (DE)**

(74) Vertreter: **Patentanwälte Dipl.-Ing. J. Richter Dipl.-Ing. F. Werdermann, Neuer Wall 10, D-2000 Hamburg 36 (DE)**

ACTORUM AG

## Beschreibung

Die Erfindung betrifft ein Bekleidungsstück, wie Jacke, Parka, Overall, Mantel, Blouson od. dgl., aus luftundurchlässigem Material, zum Erwärmen von Personen, die Kraftfahrzeuge fahren, das aus zwei Lagen besteht, die unter Ausbildung eines Luftleitsystems, dem über eine von einer Verbrennungskraftmaschine gespeiste Warmlufterzeugungseinrichtung Warmluft zugeführt wird, abschnittsweise miteinander verbunden sind und von denen die dem Körper der zu erwärmenden Person zugewandte Lage mit Warmluftaustrittsöffnungen versehen ist.

Beim Fahren von Krafträdern und offenen Kraftfahrzeugen besteht der Nachteil, dass die fahrenden Personen dem Fahrtwind ausgesetzt sind, wodurch die Gefahr gesundheitlicher Schädigungen durch Unterkühlung besteht. Um dies zu vermeiden, tragen derartige Personen besondere Bekleidungsstücke, die den Körper vollständig bedecken und windundurchlässig sind. Hierbei besteht der Nachteil, dass aufgrund der luftundurchlässigen Abschirmung der Körperoberfläche ein Feuchtigkeitsaustausch von der Körperhaut an die Umgebung nicht mehr möglich ist. Es tritt daher ein Feuchtestau ein, der regelmässig bereits nach relativ kurzer Fahrzeit eine partielle Durchfeuchtung der zwischen Körperoberfläche und der windundurchlässigen Bekleidung befindlichen Kleidungsstücke bewirkt, was neben körperlichem Unwohlsein die Gefahr von Erkältungskrankheiten begründet.

Hinzu kommt noch, dass insbesondere Rücken- und Brustpartie der fahrenden Person am ehesten unterkühlt werden, so dass es insbesondere leicht zu Schäden und Erkrankungen der Atemwege, der Lunge und der Nieren kommen kann. Die insbesondere von Motorradfahrern getragenen, eng anliegenden Schutzbekleidungsstücke ermöglichen keine ausreichende Luftzirkulation zwischen Träger und Bekleidungsstück, was zu einer Beeinträchtigung der Konzentration des Fahrers führen kann, der dadurch gezwungen ist, in immer grösserem Masse Fahrtpausen einzulegen, um sich durch Öffnen der Kleidung zu erfrischen.

Schutzbekleidungsstücke für z.B. im Freien und im Winter arbeitende Personen sind in den verschiedensten Ausführungsformen bekannt. So ist eine Schutzbekleidung, an der in Windungen verlaufende, wärmeübertragende und flüssigkeitsdurchströmte Schläuche befestigt sind, aus der DE-A Nr. 1610647 bekannt. Bei dieser Schutzbekleidung sind die Schläuche einzeln bzw. in Gruppen in aus Kanälen bestehenden Haltemitteln frei beweglich gehalten. Da sich die Schläuche bei dieser Schutzbekleidung frei in den Haltemitteln bewegen können und das ganze Schlauchsystem infolge der gewundenen Anordnung der Schläuche bei Bewegung des Trägers ziehharmonikaähnlich bewegbar ist, soll der Träger einer derartigen Schutzbekleidung die grösstmögliche Bewegungsfreiheit haben. Die Herstellung einer derartigen Schutzbekleidung ist jedoch sehr arbeits- und kostenaufwendig. Hinzu kommt, dass diese Schutzbekleidung insbesondere für im Stehen arbeitende Personen gedacht ist, denn das an der Schutzbekleidung ausgebildete Schlauchsystem führt zu einer erheblichen Behinderung der diese Schutzbekleidung tragenden Person, zumal bei Ausübung eines Druckes auf Abschnitte des Schlauchsystems eine einwandfreie Durchströmung der wärmeabgebenden Mittel durch das Schlauchsystem nicht gewährleistet ist.

Es ist ferner ein heizbares, tuchartiges Erzeugnis sowie ein heizbarer Anzug aus derartigem Erzeugnis nach der DE-A Nr. 1908742 bekannt, welches in der Weise ausgebildet ist, dass gewebte Bereiche durch eingewebte Längenabschnitte flexibler Schläuche oder Rohre zur Führung eines strömungsfähigen Wärmeträgers voneinander getrennt sind, wobei sich die Rohre jeweils ausschliesslich in einer Richtung des gewebten Erzeugnisses erstrecken und abwechselnd auf der Oberseite und auf der Unterseite des Erzeugnisses einzelne Garne bzw. Fäden oder Gruppen von Garnen bzw. Fäden quer über die Rohre verlaufen, wobei sich die Rohre in Richtung der Kettfäden erstrecken, die vergleichsweise undehnbar, dagegen die Schussfäden vergleichsweise hochdehnbar ausgebildet sind. Da die Rohre oder Schläuche aufgrund der besonderen Ausbildung dieses bekannten Erzeugnisses, aus welchem der Anzug gebildet ist, dicht am Körper des Trägers anliegen, soll eine unmittelbare Wärmeübertragung von zirkulierenden Wärmeträgern zum Rumpf durch Wärmeleitung stattfinden. Ein derart ausgebildeter Anzug ist insbesondere als Unterbekleidungsstück für Schwimm- oder Tauchanzüge vorgesehen.

Nach der US-A Nr. 4146933 ist ein Bekleidungsstück, wie Overall oder Jacke, zum Erwärmen von Personen bekannt, die im Freien tätig sind. Dieses Bekleidungsstück ist doppelwandig ausgebildet und über einen flexiblen Anschlussschlauch wird dem Innenraum des Bekleidungsstückes Warmluft von einer Warmlufterzeugungseinrichtung zugeführt. Im Bereich der Knie und der Armbeugen weist das Bekleidungsstück Luftaustrittsöffnungen auf, damit es im Innenraum des Bekleidungsstückes nicht zu Luftstauungen und somit zu Aufblähungen kommen kann. Die beiden Bekleidungsstücklagen, die den Innenraum bilden, in den die Warmluft eingeführt wird, sind in keiner Weise durch Abstandshalteeinrichtungen im Abstand gehalten, so dass die Einwirkung eines Druckes von aussen auf das mit Warmluft durchströmte Bekleidungsstück sich insofern nachteilig auswirkt, als in denjenigen Bereichen, in denen dann das Bekleidungsstück zusammengedrückt ist, keine einwandfreie Luftführung mehr möglich ist, so dass es zu Stauungen kommt. Darüber hinaus weist das bekannte Bekleidungsstück keine Warmluftaustrittsöffnungen an der das Bekleidungsstück tragenden Person zugewandten Seite auf, so dass eine direkte Beaufschlagung des Körpers der das Bekleidungsstück tragenden Person durch Warmluft nicht möglich ist. Vermittels der Warmluft wird somit das gesamte Bekleidungsstück erwärmt, so dass es durch die fehlende Warmluftableitung leicht zu Feuchtestaus kommen kann, mit der Folge, dass eine partielle Durchfeuchtung der zwsichen Körperoberfläche und der windundurchlässigen Bekleidung befindlichen Kleidungsstücke eintreten kann.

Alle diese bekannten schutzartigen Bekleidungsstücke sind in ihrer Herstellung aufwendig und gewährleisten insbesondere dann keine einwandfreie Wärmeleitung durch den warmluftführenden Zwischenraum in den Bekleidungsstükken, wenn Abschnitte des Bekleidungsstückes abgeschnürt sind oder wenn auf diese ein äusserer Druck ausgeübt wird.

Gegenüber derartigen Bekleidungsstücken zum Erwärmen von Personen ist nach der US-A Nr. 2460269 eine Einrichtung für eine Kaltluftzuführung bekannt, bei der die Luftzuführung über ein speziell ausgebildetes Rohrleitungssystem erfolgt, über das einer Person Kühlluft zugeführt wird, wobei die miteinander verbundenen Rohre dieses Kühlluftsystems mit einer Anzahl von Durchbrechungen versehen sind, über die die Kühlluftzufuhr erfolgt. Das gesamte Rohrleitungssystem wird am Körper der zu kühlenden Person angelegt, wobei auch eine Einarbeitung in westenartige Bekleidungsstücke möglich ist. Auch hier ist es möglich, dass Abschnitte des Bekleidungsstückes bzw. Rohrleitungssystems bei äusserer Druckeinwirkung abgeschnürt und der weitere Zustrom an Kühlluft unterbrochen wird.

Hier will die Erfindung Abhilfe schaffen. Die Erfindung löst die Aufgabe, ein Bekleidungsstück zum Erwärmen von Personen zu schaffen, das in seiner Herstellung wirtschaftlich und einfach ist, das eine Warmluftverteilung auf die mit dem Bekleidungsstück bedeckten Körperstellen des dieses Bekleidungsstück tragenden Trägers ermöglicht, das durch das Einführen oder Einblasen von Warmluft sich nicht stark aufbläht und das, ohne die Warmluftzuführung in ihrer Wirksamkeit zu schmälern, eine Unterbrechung einzelner Warmluftzuführungsabschnitte im Innenraum des Bekleidungsstückes auch dann zulässt, wenn beim Sitzen Abschnitte des Bekleidungsstückes zusammengedrückt werden.

Zur Lösung dieser Aufgabe sieht die Erfindung ein Bekleidungsstück zum Erwärmen von Personen gemäss der eingangs beschriebenen Art vor, das in der Weise ausgebildet ist, dass die beiden Lagen des Bekleidungsstückes unter Ausbildung einer Vielzahl von Luftaustrittsöffnungen über punktartig, stegartig oder säulenartig ausgebildete Schweissabschnitte miteinander verbunden sind, wobei die körperseitig zugewandten Luftaustrittsöffnungen in der inneren Lage benachbart oder im Bereich der Schweissabschnitte ausgebildet sind, während im Befestigungsbereich des in den Zwischenraum zwischen den beiden Lagen mündenden Warmluftzuführungsstutzens an der äusseren der inneren Lage, und zwar an der jeweils gegenüberliegenden Wandfläche der jeweils anderen Lage und im Warmluftzuführungsstutzenanschlussbereich an den einander zugekehrten Wandflächen der Lagen Isolierbeschichtungen vorgesehen sind, wobei die Lagen im Anschluss-und Warmlufteintrittsbereich des Warmluftzuführungsstutzens mit einer Verstärkungsfolie versehen ist.

Mit einem derart ausgebildeten Bekleidungsstück ist eine Erwärmungseinrichtung geschaffen, mit der Personen, die auf Krafträdern oder in offenen Fahrzeugen für die verschiedensten Zwecke fahren, eine Erwärmung erfahren, so dass die sonst auftretenden Unannehmlichkeiten vermieden werden.

Das Bekleidungsstück ist an jeden Warmlufterzeuger anschliessbar, unabhängig davon, ob die Warmluft durch die Abwärme des Motors eines Fahrzeuges oder von einem Elektro-Heissluftgebläse erzeugt wird. Das Anwendungsgebiet erstreckt sich dabei auf Fahrzeuge aller Art, wie Krafträder, offene Kraftfahrzeuge, landwirtschaftliche Zugmaschinen, Baufahrzeuge, Wasserfahrzeuge, wie Motorboote und Motoryachten, sowie gleisgebundene Arbeitsmaschinen, in denen die Fahrer oder Mitfahrer ungeschützt sind. Das Bekleidungsstück kann einstückig aus Hose und Jacke bestehen; es kann jedoch auch nur als Jakke, Parka oder Mantel oder als Innenteil für ein Bekleidungsstück ausgebildet sein. Vorteilhaft ist dabei die Verwendung eines mit einem warmluftführenden Kanalsystem ausgebildeten Innenteils, welches entsprechend einem Innenfutter in einem entsprechenden Bekleidungsstück lösbar, d.h. einknöpfbar, angeordnet werden kann, wobei auch die Möglichkeit besteht, ein derart ausgebildetes Innenteil unter ein Bekleidungsstück, wie Jacke, Parka, Mantel od. dgl., zu ziehen, so dass Personen, die auf Krafträdern oder in offenen Fahrzeugen fahren, nicht auf eine speziell ausgebildete und teure Schutzbekleidung angewiesen sind. Das Innenteil wird vor Anlegen des üblichen Bekleidungsstückes angelegt oder vorher mit dem Bekleidungsstück vermittels Druckknöpfen oder Reissverschlüssen verbunden. Mit dem Innenteil ist somit ebenfalls eine Personenerwärmungseinrichtung geschaffen, die in ihrer Herstellung preiswert ist und keinen hohen technischen Aufwand erfordert.

Die spezielle Ausbildung des Innenraumes des Bekleidungsstückes gewährleistet eine einwandfreie Warmluftzuführung und -leitung zu den Luftaustrittsöffnungen in der inneren Lage des Bekleidungsstückes, so dass alle mit dem Bekleidungsstück bedeckten Körperstellen der dieses Bekleidungsstück tragenden Person mit Warmluft beaufschlagt werden.

Die besondere Ausgestaltung des warmluftführenden Kanalsystems im Innenraum des Bekleidungsstückes verhindert einerseits ein unnatürliches Aufblähen des Bekleidungsstückes beim Einblasen von Warmluft, während zum anderen die abschnittsweise angeordneten und die innere und die äussere Lage miteinander verbindenden Schweissstellen dem Bekleidungsstück eine hohe Festigkeit und Haltbarkeit geben. Die Luftaustrittsöffnungen sind in derjenigen Lage des Bekleidungsstückes vorgesehen, die der Körperseite der dieses Bekleidungsstück tragenden Person zugewandt ist, so dass die aus dem Innenraum des Bekleidungsstückes austretende Warmluft zu einer gleichmässigen Erwärmung der mit dem Bekleidungsstück bedeckten Stellen des Körpers beiträgt.

Nach einer Weiterbildung der Erfindung sind in den Verbindungsbereichen der Schweissabschnitte für die beiden Lagen des Bekleidungsstückes unter Aufrechterhaltung geschlossener, ringförmiger Schweissstellen Durchbrechungen ausgebildet. Hierdurch wird erreicht, dass bei einer Faltung des Bekleidungsstückes die Durchbrechungen nicht verschlossen werden, was durch die ringförmigen, den Randbereich der Durchbrechungen versteifenden Schweissstellen erfolgt.

Im folgenden wird die Erfindung anhand von verschiedene Ausführungswege darstellenden Zeichnungen näher erläutert. Es zeigen:

Fig. 1 in einer Ansicht von vorn ein mit einem warmluftführenden Kanalsystem versehenes Bekleidungsstück, wobei die äussere Lage des Bekleidungsstückes abschnittsweise entfernt ist,

Fig. 2 einen vergrösserten waagerechten Schnitt gemäss Linie II-II in Fig. 1,

Fig. 3 in einer schematischen Darstellung einen Abschnitt des Bekleidungsstückes mit zwei luftkanalartigen Abschnitten und den Luftaustrittsdurchbrechungen, und

Fig. 4 teils in Ansicht, teils in einem senkrechten Schnitt den an das Bekleidungsstück angeschlossenen Warmluftzuführungsstutzen.

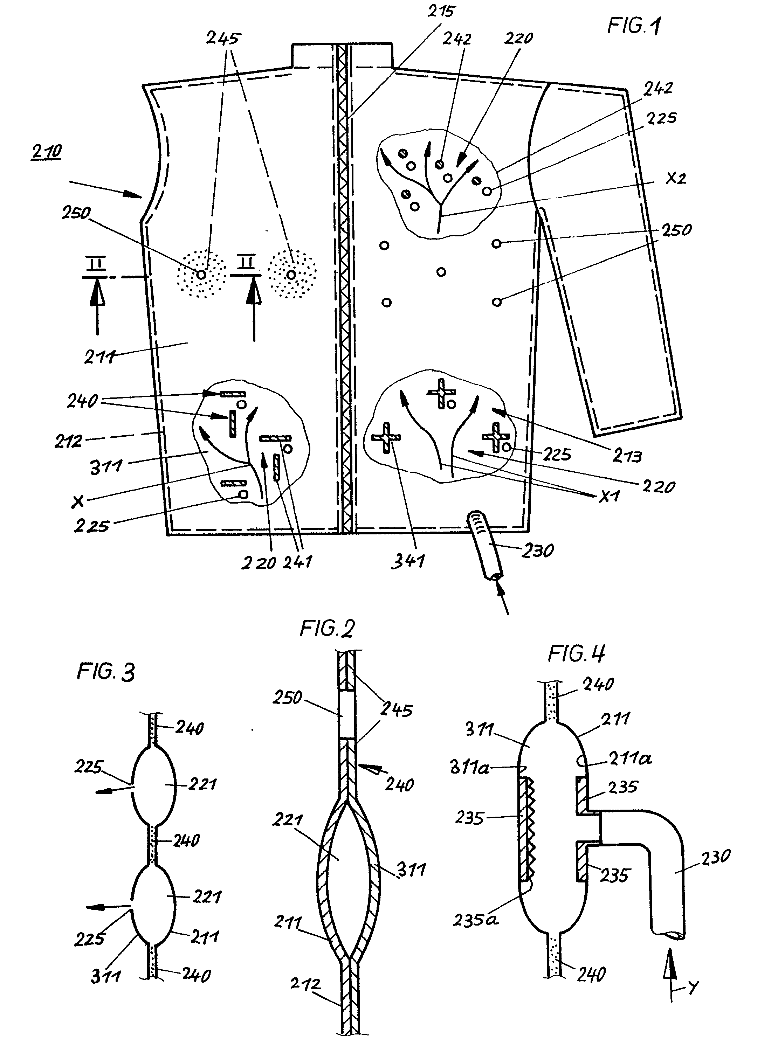

Das in Fig. 1 dargestellte Bekleidungsstück ist mit 210 bezeichnet und jackenartig ausgebildet. Das Bekleidungsstück 210 kann ärmellos ausgebildet oder mit Ärmeln versehen sein. Vorderseitig erfolgt das Schliessen des Bekleidungsstückes mittels eines bei 215 angedeuteten Reissverschlusses, jedoch auch andere Verbindungsmittel, wie Knopfleiste, Druckknopfleiste od. dgl., können zur Anwendung gelangen.

Das Bekleidungsstück 210 ist doppelwandig ausgebildet und besteht aus zwei Lagen, einer äusseren Lage 211 und einer inneren Lage 311, wobei letztere die dem Körper des Trägers des Bekleidungsstückes zugewandte Seite darstellt. Die beiden Lagen 211, 311 bestehen aus schweissbarer Kunststoffolie oder aus einem mit einer Kunststoffolie kaschierten Gewebe.

Die beiden Lagen 211, 311 sind unter Ausbildung eines geschlossenen Innenraumes 213 bei 212 randverschweisst. In diesem Innenraum 213 ist ein warmluftführendes Kanalsystem 220 ausgebildet, das aus einer Vielzahl von miteinander verbundenen luftkanalartigen Abschnitten 221 gebildet ist. Diese luftkanalartigen und zusammenhängenden Abschnitte 221 werden gebildet von einer abschnittsweisen oder punktartigen Verschweissung der beiden Lagen 211 und 311 miteinander. Da die beiden Lagen 211, 311 des Bekleidungsstückes 210 aus schweissbarer Kunststoffolie oder aus einem mittels einer schweissbaren Kunststoffolie kaschierten Gewebe bestehen, ist ein abschnittsweises Verschweissen der beiden Lagen 211, 311 mühelos möglich.

Die mit 240 bezeichneten Schweissabschnitte sind so angebracht, dass ein zusammenhängendes, warmluftführendes Kanalsystem 220 gebildet ist.

Das abschnittsweise Verschweissen der beiden Lagen 211, 311 des Bekleidungsstückes 210 kann punktartig erfolgen, wie dies in Fig. 1 bei 242 angedeutet ist. Diese punktartigen Schweissstellen sind dann in etwa säulenartig ausgebildet. Fig. 1 zeigt darüber hinaus auch andersartig ausgebildete Schweissabschnitte 240, die beispielsweise stegförmig ausgebildet und bei 241 angedeutet sind. Diese stegartigen Schweissabschnitte 240 sind zueinander versetzt angeordnet, so dass die durch den Innenraum 213 des Bekleidungsstückes 210 geführte Luft in Pfeilrichtung X, X1 und X2 strömen kann. Die Schweissstege 241 können jedoch auch kreuzartig ausgebildet sein, wie dies bei 341 in Fig. 1 angedeutet ist. Auch hier ist vorteilhafterweise eine versetzte Anordnung und Zuordnung der Kreuzstege vorgesehen.

Die Zufuhr von Warmluft in den Innenraum 213 des Bekleidungsstückes 211 erfolgt über einen Warmluftzuführungsstutzen 230, der als flexible Schlauchleitung ausgebildet und an eine in an sich bekannter Weise ausgebildete, in der Zeichnung nicht dargestellte Warmlufterzeugungseinrichtung angeschlossen ist. Diese Warmlufterzeugungseinrichtung kann als mit der Verbrennungskraftmaschine eines Fahrzeuges oder Kraftrades verbundener Wärmeaustauscher ausgebildet sein. Das Eindrücken der Warmluft durch den Warmluftzuführungsstutzen 230 in den Innenraum 213 des Bekleidungsstückes 210 kann mittels eines Gebläses erfolgen.

Der Anschluss des Warmluftzuführungsstutzens 230 an einer der beiden Lagen 211, 311 des Bekleidungsstückes 210 ist in Fig. 4 dargestellt. Hier erfolgt der Anschluss des Warmluftzuführungsstutzens 230 an den Innenraum 213 des Bekleidungsstückes 210 im Bereich der äusseren Lage 211, jedoch auch ein Anschluss an der inneren Lage 311 des Bekleidungsstückes kann vorgesehen sein. Die Zufuhr der Warmluft durch den Warmluftzuführungsstutzen 230 erfolgt in Pfeilrichtung Y.

Um im Einströmungsbereich der Warmluft in den Innenraum 213 des Bekleidungsstückes 210 eine zu starke Erwärmung der Kunststoffolienlage zu vermeiden, die dem Warmluftzuführungsstutzenanschlussbereich gegenüberliegt, weist nicht nur die Innenwandfläche der Lage 311 eine Isolierbeschichtung 235 auf, sondern auch an der Innenwandfläche der äusseren Lage 211 im Anschlussbereich 211a des Zuführungsstutzens 230 ist eine Isolierbeschichtung 235 vorgesehen (Fig. 4). Diese Isolierbeschichtungen 235 können so ausgebildet sein, dass sie gleichzeitig versteifend wirken, so dass ein Zusammendrücken der sich gegenüberliegenden Wandflächen der beiden Lagen 211, 311 im Anschlussbereich 211a des Warmluftzuführungsstutzens 230 vermieden wird, so dass die Warmluftzufuhr in keiner Weise bei derartigen Situationen beeinträchtigt wird. Zur Abstandshalterung der beiden Wandflächen der Lagen 211, 311 kann die eine der beiden Isolierbeschichtungen mit einer Abstandsprofilierung 235a versehen sein, so dass auch bei einem Zusammenpressen der beiden Lagen 211, 311 ein Durchströmen der Warmluft aus dem Warmluftzuführungsstutzen 230 in den Innenraum 213 des Bekleidungsstückes 210 gewährleistet ist.

Um die in den Innenraum 213 des Bekleidungsstückes 210 zugeführte Warmluft den vom Bekleidungsstück bedeckten Körperstellen des Trägers dieses Bekleidungsstückes zuführen zu können, weist die innere Lage 311 des Bekleidungsstückes 210 im Bereich der luftkanalartigen Abschnitte 221 Luftaustrittsöffnungen 225 auf, die über die gesamte Fläche der Lage 311 verteilt sind. Um den Luftaustritt durch die Luftaustrittsöffnungen 225 in keiner Weise zu schmälern, sind die Luftaustrittsöffnungen 225 benachbart bzw. im Bereich der Schweissabschnitte 240 vorgesehen, die darüber hinaus noch als Versteifungsstege ausgebildet sein können (Fig. 1 und 3).

Um einen Luftausgleich zwischen den zu erwärmenden Körperstellen und dem angelegten Bekleidungsstück 210 mit der Aussenluft zu ermöglichen, sind nach einer weiteren Ausführungsform gemäss Fig. 1 und 2 in den Verbindungsbereichen der Schweissabschnitte 240 Durchbrechungen 250 vorgesehen, die im Bereich dieser Schweissabschnitte 240 derart ausgebildet sind, dass benachbart zu den einzelnen Durchbrechungen 250 geschlossene, ringförmige Schweissstellen 245 beibehalten werden, so dass die Wirkungsweise der vorgesehenen Schweissabschnitte 240 aufrechterhalten wird, jedoch gleichzeitig unter Ausbildung von Belüftungs-/Durchlüftungsöffnungen, so dass es in dem Innenraum zwischen dem angelegten Bekleidungsstück und dem Körper zu keinem Feuchtestau kommen kann.

Bei dem Bekleidungsstück 210 erstreckt sich die Doppelwandigkeit über das gesamte Bekleidungsstück und, wenn Arm- und Beinteile vorgesehen sind, auch auf diese. Ein Aufblaseffekt wird durch die Schweissabschnitte 240 bzw. 241 bzw. 242 vermieden, die die beiden Folien der inneren und äusseren Lage 211, 311 des Bekleidungsstückes verbinden. Die in den Innenraum 213 des Bekleidungsstückes 210 eingeblasene Warmluft kann sich trotz dieser Schweissabschnitte 240 über den gesamten Innenraum 213 des Bekleidungsstückes 210 ausbreiten und hat durch die vorgesehenen Luftaustrittsöffnungen 225 die Möglichkeit, die mit dem Bekleidungsstück 210 bedeckten Körperstellen zu erwärmen. Die Anordnung und Zuordnung der die beiden Folienlagen 211 und 311 miteinander verbindenden Schweissabschnitte 240 ist derart, dass sich einzelne Abschnitte des Bekleidungsstückes 210 beim Einblasen der Warmluft nicht blasenförmig erweitern können.

Das für die Herstellung des Bekleidungsstückes 210 verwendete Material ist luftundurchlässig und wasserdicht. Die Schwitzwasserbildung des Trägers des Bekleidungsstückes wird durch die dem Körper zugeführte Warmluft und Ableitung durch die Durchbrechungen 250 verringert bzw. ganz vermieden. Ist die Luftzuführung unterbrochen, z.B. bei Beendigung der Fahrt des Trägers eines derartigen Bekleidungsstückes, so könnte es zu einer Schweissbildung kommen, die jedoch aufgrund der verwendeten Durchbrechungen 250 vermieden wird. Da das Bekleidungsstück auch unter der normalen Kleidung getragen werden kann, lässt sich ein Luftausgleich, Temperaturausgleich und eine Luftzirkulation mittels der Durchbrechungen 250 erreichen. Die in den Schweissabschnitten 240 vorgesehenen Durchbrechungen 250 können sowohl kreisförmig als auch viereckig ausgebildet sein. In diesem Bereich sind dann die Schweissabschnitte 240 in entsprechender Weise ausgebildet, so dass benachbart zu jeder Durchbrechung 250 eine ringförmige Schweissstelle 245 aufrechterhalten wird.

Ein derart ausgebildetes Bekleidungsstück 210 ist sehr preiswert herstellbar, da es lediglich nur aus zwei abschnittsweise miteinander verbundenen Kunststoffolien besteht und von einem zusätzlichen wärmeisolierenden Material, wie Futter od. dgl., abgesehen werden kann. Das warmluftführende Kanalsystem 220 ist auch dann funktionsfähig, wenn Teile des Kanalsystems abgeklemmt werden, z.B. bei Benutzung des Bekleidungsstückes beim Sitzen mit einer Rückenlehne. In diesem Bereich wird wohl die Luftführung im Innenraum 213 des Bekleidungsstückes 210 unterbrochen, jedoch die weitere Warmluftführung im übrigen Bereich des Innenraums 213 in keiner Weise beeinträchtigt.

In dem flexiblen Warmluftzuführungsstutzen 230 kann ein in der Zeichnung nicht dargestelltes Absperrventil vorgesehen sein, welches es dem Träger des Bekleidungsstückes 210 erlaubt, einerseits die Menge der zugeführten Warmluft zu regulieren und andererseits die Warmluftzufuhr zu unterbrechen, falls keine Körpererwärmung gewünscht wird. Ein derartiges Absperrventil kann darüber hinaus auch noch mit einem Aussenluftzuführungsstutzen versehen und derart steuerbar sein, dass die Warmluft mit Kaltluft derart gemischt werden kann, dass eine für den Träger erträgliche und angenehme Temperatur erreicht wird.

Ist das Bekleidungsstück 210 als Innenteil ausgebildet, dann kann es in an sich bekannter Weise mit in der Zeichnung nicht dargestellten Verbindungseinrichtungen versehen sein, um das Innenteil beispielsweise innenfutterartig in einem Bekleidungsstück, wie Jacke, Parka, Mantel od. dgl., befestigen zu können. Als Befestigungseinrichtung können Druckknopfbefestigungen oder Reissverschlüsse oder andere geeignete Verbindungsmittel Verwendung finden.

Ebenso wie das Bekleidungsstück 210 kann auch das Innenteil mit Ärmeln versehen sein. Die Ärmel sind dann ebenfalls entsprechend dem Bekleidungsstück 210 ausgebildet.

Anstelle der Warmlufterzeugungseinrichtung kann der Innenraum des Bekleidungsstückes 210 über die flexible Leitung 230 auch mit einer Kühllufterzeugungseinrichtung in Verbindung stehen, so dass die Möglichkeit besteht, dem menschlichen Körper bei angelegtem Bekleidungsstück Kühlluft zuzuführen, was besonders dann von Vorteil ist, wenn die Bekleidung in wärmeren Jahreszeiten oder in warmen Regionen getragen wird.

## Patentansprüche

1. Bekleidungsstück, wie Jacke, Parka, Overall, Mantel, Blouson od. dgl., aus luftundurchlässigem Material, zum Erwärmen von Personen, die Kraftfahrzeuge fahren, das aus zwei Lagen besteht, die unter Ausbildung eines Luftleitsystems, dem über eine von einer Verbrennungskraftmaschine gespeiste Warmlufterzeugungseinrichtung Warmluft zugeführt wird, abschnittsweise miteinander verbunden sind und von denen die dem Körper der zu erwärmenden Person zugewandten Lage mit Warmluftaustrittsöffnungen versehen ist, dadurch gekennzeichnet, dass die beiden Lagen (211, 311) des Bekleidungsstückes (210) unter Ausbildung einer Vielzahl von Luftaustrittsöffnungen (225) über punktartig (242), stegartig (241) oder säulenartig (242) ausgebildete Schweissabschnitte (240) miteinander verbunden sind, wobei die körperseitig zugewandten Luftaustrittsöffnungen (225) in der inneren Lage (311) benachbart oder im Bereich der Schweissabschnitte (240) ausgebildet sind, während im Befestigungsbereich des in den Zwischenraum zwischen den beiden Lagen (211, 311) mündenden Warmluftzuführungsstutzens (230) an der äusseren oder inneren Lage (211, 311), und zwar an der jeweils gegenüberliegenden Wandfläche der jeweils anderen Lage und im Warmluftzuführungsstutzenanschlussbereich (211a) an den einander zugekehrten Wandflächen der Lagen (211, 311) Isolierbeschichtungen (235) vorgesehen sind, wobei die Lagen (211, 311) im Anschluss- und Warmlufteintrittsbereich des Warmluftzuführungsstutzens (230) mit einer Verstärkungsfolie versehen sind.

2. Bekleidungsstück nach Anspruch 1, dadurch gekennzeichnet, dass in den Verbindungsbereichen der Schweissabschnitte (240) für die beiden Lagen (211, 311) des Bekleidungsstückes (219) unter Aufrechterhaltung geschlossener, ringförmiger Schweissstellen (245) Durchbrechungen (250) ausgebildet sind.

## Claims

1. Clothing article such as jackets, parkas, overalls, coats, blousons or the like, made from an air-impermeable material, for heating drivers of motor vehicles, and which consists of two layers, which are sectionally interconnected, whilst forming an air-conducting system, to which hot air is supplied by means of a hot air production means fed by the internal combustion engine, the layer facing the body of the person to be heated being provided with hot air outlets, characterized in that the two layers (211, 311) of the clothing article (210) are interconnected by means of punctiform (242), web-like (241) or columnar (242) welded portions (240), accompanied by the formation of a plurality of air outlets (225), whilst the hot air supply connection (230) issuing into the fixing area of the gap between the two layers (211, 311) on the outer or inner layer (211, 311) and namely on the in each case facing surface of the in each case other layer and in the hot air supply connection area (211a) on the facing wall surfaces of layers (211, 311) insulating coatings (235) are provided, layers (211, 311) being provided with reinforcing foil in the connecting and hot air inlet area of the hot air supply connection (230).

2. Clothing article according to Claim 1, characterized in that perforations (250) are formed in the connecting areas of the welded sections (240) for the two layers (211, 311) of the clothing article (210), whilst maintaining annular welds (245).

## Revendications

1. Vêtement chauffant tel que veste, parka, combinaison, manteau, blouson ou similaire en matière imperméable à l'air, pour qu'aient chaud les conducteurs de véhicules à moteur, comprenant deux couches interconnectées l'une à l'autre en sections, en formant un système conducteur aérien alimenté en air chaud par un équipement produisant de l'air chaud chargé par un moteur à combustion interne, la couche faisant face au corps de la personne à réchauffer est munie d'orifices de sortie d'air chaud, caractérisé en ce que les deux couches (211, 311) du vêtement chauffant (210) sont interconnectées l'une à l'autre par des sections soudées (240) en points (242), en traverses (241) ou en colonnes (242) et présentent un grand nombre d'orifices de sortie d'air (225), ces orifices de sortie d'air (225) — adjacents au corps de la personne à réchauffer — de la couche intérieure (311) étant disposés au voisinage l'un de l'autre ou près des sections soudées (240), tandis que la zone de fixation du manchon d'alimentation d'air chaud (230), aboutissant dans l'écartement entre les deux couches (211, 311) à la couche extérieure ou intérieure (211, 311), est à la surface opposée à l'autre couche respective, et les surfaces opposées aux couches (211, 311) de la zone adjacente au point de fixation du manchon d'alimentation d'air chaud (211a) sont munies d'un revêtement isolant (235), les couches (211, 311) proches du point de fixation et d'alimentation du manchon d'alimentation d'air chaud (230) étant exécutées avec une feuille de renforcement.

2. Vêtement chauffant selon la revendication 1, caractérisé en ce que les sections d'interconnexion des sections soudées (240) des deux couches (211, 311) du vêtement chauffant (210) sont exécutées avec des découpures (250), tout en maintenant fermés les soudages (245) annulaires.

FIG.1

215
245
242 220
242
225
210
250
X2
250
II
II
211
240
212
311
X
225
220 241
225
213
225
X1
220
230
341

FIG.2

250
245
240
221
311
211
212
7

FIG.3

240
225
221
240
221
225
311
211
240

FIG.4

240
311
211
311a
211a
235
235
235
235a
240
230
Y